Europäisches Patentamt

(19) European Patent Office

Office européen des brevets

(11) Numéro de publication: **0 251 864**
**B1**

(12) **FASCICULE DE BREVET EUROPEEN**

(45) Date de publication du fascicule du brevet:
05.09.90

(21) Numéro de dépôt: **87401376.6**

(22) Date de dépôt: **18.06.87**

(51) Int. Cl.⁵: **F41B 11/00, F41B 6/00**

(54) **Procédé pour lancer des projectiles à des hypervitesses et lanceur mettant en oeuvre ce procédé.**

(30) Priorité: **20.06.86 FR 8608949**

(43) Date de publication de la demande:
**07.01.88 Bulletin 88/1**

(45) Mention de la délivrance du brevet:
**05.09.90 Bulletin 90/36**

(84) Etats contractants désignés:
**BE DE ES GB IT NL SE**

(56) Documents cités:
**FR-A- 1 523 179**
**GB-A- 679 269**
**US-A- 3 916 761**

(73) Titulaire: **CENTRE NATIONAL DE LA RECHERCHE
SCIENTIFIQUE (CNRS), 15, Quai Anatole France,
F-75700 Paris Cedex 07(FR)**
Titulaire: **COMMISSARIAT A L'ENERGIE ATOMIQUE,
31/33, rue de la Fédération, F-75015 Paris(FR)**

(72) Inventeur: **Doucet, Henri Lab. de Physique des Milieux
Ionisés, Ecole Polytechnique, F-91128 Palaiseau
Cedex(FR)**
Inventeur: **Jones, Denver Lab. de Physique des Milieux
Ionisés, Ecole Polytechnique, F-91128 Palaiseau
Cedex(FR)**
Inventeur: **Buzzi, Jean-Max Lab. de Physique des,
Milieux Ionisés Ecole Polytechnique, F-91128 Palaiseau
Cedex(FR)**
Inventeur: **Camarcat, Noel, C.E.N. Saclay-Département
de Physico-chimie, B.P. 522 F-91191 Gif sur Yvette(FR)**

(74) Mandataire: **Mongrédien, André et al, c/o
BREVATOME 25, rue de Ponthieu, F-75008 Paris(FR)**

ACTORUM AG

## Description

La présente invention a pour objet un procédé pour lancer des projectiles à des hypervitesses et un lanceur mettant en oeuvre ce procédé.

L'invention peut être utilisée pour lancer des microprojectiles à des vitesses de 2 à 10 km/s pour simuler des micrométéorites afin de tester leurs effets sur des engins spatiaux. Elle peut également être utilisée pour des études expérimentales relatives à la fusion par collision à grande vitesse de macroparticules.

Le domaine technique de l'invention est l'accélération de microprojectiles à de très grandes vitesses de l'ordre de plusieurs km/s, gamme qualifiée d'hypervitesse par rapport aux vitesses des lanceurs classiques.

Il est bien connu que la vitesse d'un projectile dans un canon hypervitesse est limitée à une vitesse théorique V donnée par la formule:

$$V = (2PAL/M)^{1/2} \quad (1)$$

où A et M désignant respectivement la surface et la masse du projectile, et où P est la moyenne spatiale de la pression propulsive soit:

$$P = \frac{1}{L} \int_0^L p(x)dx \quad (2)$$

où p(x) est la pression dépendant de la coordonnée x.

Pour lancer à une grande vitesse un projectile de masse M, il faut donc utiliser une pression aussi élevée que possible, lorsqu'on a augmenté au maximum le rapport AL/M.

Les dispositifs actuellement utilisés ou étudiés pour réaliser ces hypervitesses sont respectivement:
- les canons à poudre; ce type de lanceur présente l'inconvénient de conduire à des vitesses limitées à la vitesse thermique des gaz brûlés,
- les canons à hydrogène et hélium, qui utilisent des gaz très légers; mais ces gaz sont relativement difficiles à chauffer,
- les systèmes à décharge électrique dans un gaz; mais les performances de ces dispositifs sont limitées par la trop faible résistance de l'arc électrique,
- les dispositifs à décharge électrique utilisant l'explosion d'une feuille d'aluminium dans l'air comme moyen de chauffage; mais ces dispositifs supposent l'utilisation dans l'atmosphère (ou au moins dans un gaz),
- les canons électromagnétiques, à rails ou à induction; mais leur encombrement est souvent prohibitif.

Le document FR-A 1 523 179 décrit par exemple un dispositif comprenant une charge liquide enfermée dans un récipient hermétique dans lequel s'établit un équilibre liquide-vapeur. Lorsqu'on provoque une ouverture rapide du récipient, il se produit un abaissement de pression, laquelle tombe à la valeur de la pression atmosphérique. La température du liquide se trouve alors être supérieure au point d'ébullition et le liquide se transforme en vapeur. La vaporisation provoque la poussée du projectile.

Pour que cette transformation se produise, le liquide est choisi de telle sorte que son point d'ébullition soit inférieur à la température ambiante pour les conditions de pression ambiante.

On connaît également, par le document US-A 3 916 761, un dispositif permettant d'accélérer un projectile. Il comprend un accélérateur à gaz léger (par exemple l'hydrogène ou l'hélium) contenu dans un tube entre un piston déformable en polyéthylène et un diaphragme. Le projectile traverse ensuite une enceinte communiquant avec une chambre à plasma de forme coaxiale. Une feuille fine, par exemple en aluminium, relie deux tubes coaxiaux. Un condensateur peut être déchargé à travers cette feuille pour provoquer un plasma et accélérer le projectile préalablement mis en mouvement par une amorce et une charge explosive. Il y a donc coopération entre deux phénomènes, l'un mettant en oeuvre un explosif, l'autre mettant en œuvre un plasma.

Ces dispositifs assez complexes sont peu efficaces et ne permettent pas d'atteindre les grandes vitesses envisagées par l'invention.

La présente invention a pour but de remédier à ces inconvénients en proposant un nouveau moyen pour créer une pression très élevée dans le but de propulser un projectile, ce nouveau moyen conduisant à des hypervitesses, avec un dispositif de faible encombrement et de réalisation très simple.

Le procédé de l'invention consiste, comme dans FR-A 1 523 179 et conformément au préambule de la revendication 1, à provoquer à l'arrière d'un projectile introduit dans un canon une augmentation brutale de pression apte à propulser le projectile hors du canon, cette augmentation étant produite à partir d'une charge liquide, et il est caractérisé par le fait qu'on fait passer directement cette charge liquide à l'état de vapeur, sans ébullition, par effet Joule.

Ce procédé permet, par son principe physique particulier, d'obtenir des pressions plus élevées qu'avec les procédés antérieurs.

Le processus d'accélération selon l'invention est en fait toujours, en pratique, au moins partiellement accompagné d'un processus d'accélération par effet électromagnétique, mais celui-ci n'a qu'une contribution modeste à la vitesse finale du projectile.

La propulsion du projectile s'effectue dans un vide secondaire et non dans l'atmosphère, comme pour les lanceurs à feuille d'aluminium, ou dans un vide primaire, comme pour certains canons à poudre classiques.

Dans une variante avantageuse, la charge conductrice est initialement à l'état solide et est rendue liquide dans une phase préliminaire de chauffage par effet Joule qui provoque la fusion de la charge.

De préférence, l'effet Joule est produit par la décharge très rapide d'un banc de condensateurs à travers une ligne de propagation et la charge conductrice.

Par décharge très rapide, on entend ici une décharge qui se produit pendant une durée allant d'environ 50 nanosecondes à environ 1 microseconde.

Comme la décharge est oscillante, cette durée correspond sensiblement au quart de la période de l'oscillation, c'est-à-dire à la durée mise pour atteindre le premier maximum du courant.

La présente invention a également pour objet un lanceur qui met en oeuvre ce procédé. Ce lanceur comprend, comme dans FR-A 1 523 179 et conformément au préambule de la revendication 6, un canon dans lequel est introduit un projectile et un moyen pour créer une augmentation brutale de pression à l'arrière du projectile apte à propulser le projectile hors du canon, ce moyen contenant une charge liquide et il est caractérisé par le fait que ce moyen est apte à faire passer directement la charge liquide à l'état vapeur, sans ébullition, par effet Joule.

L'invention sera mieux comprise à la lecture de la description qui va suivre, d'exemples de réalisation donnés uniquement à titre explicatif et nullement limitatif. Cette description se réfère à des dessins annexés sur lesquels:

- la figure 1 est un schéma général d'un lanceur conforme à l'invention,
- la figure 2 montre une coupe schématique du dispositif accélérateur contenant un liquide métallique et un projectile,
- la figure 3 montre l'évolution du liquide vers le gaz dans un diagramme pression-volume,
- la figure 4 montre la même évolution, mais dans un diagramme pression-température,
- La figure 5 montre l'allure des variations de la résistance électrique du métal employé en fonction de la température suivant les différents états liquides, gaz, plasma.

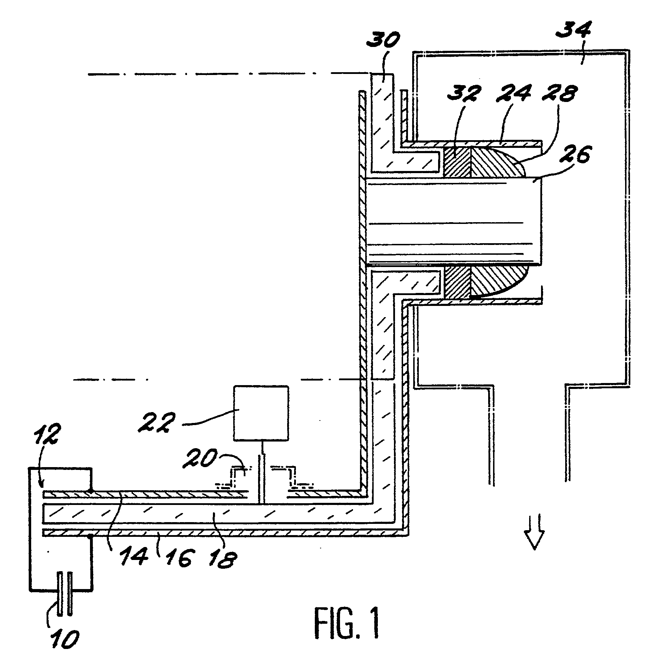

Le dispositif représenté sur la figure 1 est un mode particulier de réalisation d'un lanceur selon l'invention qui utilise une structure accélératrice coaxiale. Il comporte: un banc de condensateurs 10, une ligne plate 12, comportant deux conducteurs plans 14 et 16, séparés par un diélectrique 18, un commutateur à très basse inductance et à fort courant 20, un tube extérieur 24 et un cylindre intérieur 26, placés dans une enceinte à vide 34, une culasses 30, une charge métallique 32 à évaporer par effet Joule et un projectile 28 à accélérer. La culasse 30 est massive et fabriquée dans un matériau résistant à de très fortes pressions, comme le tube extérieur 24. Dans l'exemple illustré la charge métallique 32 est constituée d'une couronne métallique de faible épaisseur, assurant un contact électrique entre les tubes 24 et 26. Cette couronne est faite d'un métal solide ou liquide qui peut être soit déposé sur la culasse, soit sur la face arrière du projectile, ou simplement placée entre ces deux éléments. La culasse comporte obligatoirement une partie isolante pour ne pas mettre en court-circuit les tubes 24 et 26. Ces derniers sont reliés électriquement respectivement aux deux plaques 14 et 16 de la ligne plate 12 qui réalise les amenées de courant.

Dans le dispositif particulier illustré, le commutateur 20 est un commutateur à décharge en surface de diélectrique déclenché par une impulsion de haute tension délivrée par un générateur 22.

Le projectile 28 a la forme d'une couronne circulaire.

Il est constitué soit d'un diélectrique solide, soit d'un matériau conducteur recouvert d'un isolant.

Ce dispositif fonctionne de la manière suivante:

lorsqu'une impulsion est envoyée par le générateur 22 sur le commutateur 20, celui-ci connecte le banc de condensateurs 10 aux tubes lanceur 24 et 26. Le courant passe par la ligne plate, s'école axialement dans les tubes 24 et 26 et radialement dans la charge métallique 32 qui s'échauffe et fond.

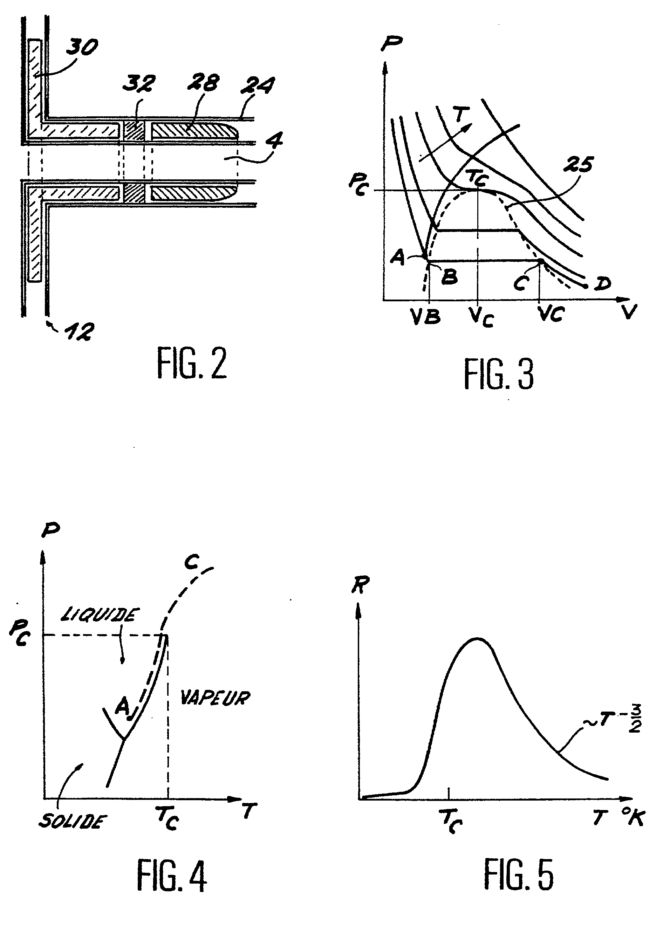

L'état du métal liquide est représenté par le point A dans les figures 3 et 4. Le courant continue à monter, chauffant le liquide, dont la résistivité R augmente avec la température comme le montre la figure 5.

Compte tenu des très faibles inductances des composants du circuit capacités, ligne plate, commutateur, tubes lanceurs), le courant monte rapidement et la température du liquide s'élève sans laisser à celui-ci le temps matériel de se dilater. La pression du liquide s'élève donc en même temps que sa température si bien que Le métal ne passe pas tout de suite à l'état de vapeur, mais suit au contraire un processus qui est représenté par la courbe C dans les figures 3 et 4, jusqu'au-dessus du point critique Pc, Tc, où il passe de façon continue à l'état de vapeur, sans formation de bulles à l'intérieur du liquide. Ce point est essentiel au bon fonctionnement du procédé. En effet, les expériences réalisées par le Demandeur ont montré qu'un liquide chaud passe à ébullition si on lui laisse le temps de se dilater. Dans ce cas, le système est instable, la résistivité électrique du gaz à trop basse température est en effet très élevée et des gouttes de liquide sont formées lors de l'explosion de la couronne métallique. Les pressions atteintes restent alors limitées. En suivant les états décrits par la courbe C, sur les figures 4 et 5, le métal est transformé de façon continue en vapeur en un temps très court. Compte tenu de sa haute température, il sera partiellement ionisé par effet thermique et sa résistance électrique sera dominée par les collisions électrons-neutres jusque vers 10000K où cette résistance deviendra celle d'un plasma complètement ionisé et donc décroissant en fonction de la température comme $T^{-3/2}$ ainsi que l'indique la figure 5.

Pour une meilleure compréhension du diagramme de la figure 3, on rappelle que si l'on représente la pression P et le volume V d'une masse de matière à température constante, on a d'abord un état correspondant à un point A où la totalité de la matière est liquide. Si la pression diminue, le volume augmente et l'on atteint un point B à partir duquel la pression reste constante et le volume continue à augmenter. Ce palier s'étend jusqu'à un point C. Le long du segment BC le liquide est en équilibre avec sa vapeur. En C la totalité de la matière est à l'état gazeux. Au-delà de C la pression se remet à décroître lorsque le volume augmente (D). La courbe 25 en tirets marque le contour de la zone où le liquide est en équilibre avec sa vapeur.

Les volumes VB et VC correspondant au liquide saturé et à la vapeur saturée sont différents. Mais lorsque la température augmente, ces volumes se rapprochent l'un de l'autre jusqu'à devenir égaux, ce qui se produit à une température Tc, dite température critique. Le point correspondant, de pression Pc, de volume Vc et de température Tc est appelé point critique.

Ce point se retrouve dans un diagramme P, T comme celui de la figure 4.

Selon l'invention, la charge conductrice, qui est initialement dans un état liquide, représenté par le point A, reste liquide pendant toute la phase de chauffage, ce qui signifie que le point de coordonnées P, V représentatif de l'état liquide reste à gauche de la courbe en tirets 25 dans le diagramme de la figure 3, et reste dans le secteur représentant l'état liquide dans le diagramme P,T de la figure 4. Cela est possible grâce à la rapidité de l'échauffement du liquide, lequel n'a pas le temps de se dilater. En d'autres termes, le métal n'est jamais dans un état tel que le liquide soit en équilibre avec sa vapeur.

Les paramètres du circuit électrique sont choisis de façon à optimiser le transfert d'énergie depuis le banc de condensateurs jusqu'à la charge métallique. Dans ces conditions, la résistance électrique est maximum après environ un quart de période T du régime de décharge oscillante du banc de condensateurs.

A la fin de la phase de chauffage, la charge métallique est transformée en gaz chaud, qui est resté dense car il n'a pas eu le temps de se détendre considérablement. Il se trouve donc à une très forte pression. Cette pression va permettre la propulsion du projectile à une très grande vitesse.

Dans un mode particulier de réalisation, le banc de condensateurs 10 est constitué de deux condensateurs de 4 F, et de quelques nH, chargés à 20 kV. Lorsqu'une feuille d'aluminium de 10 m d'épaisseur est utilisée pour constituer la charge conductrice, le temps T/4 est d'environ 800 ns.

Le mode de réalisation de la figure 1 n'est naturellement qu'un exemple de mise en oeuvre. On peut imaginer bien d'autres formes pour les diverses pièces. Par exemple le canon peut être formé par deux pièces non nécessairement circulaires (par exemple à section rectangulaire). On peut même utiliser deux plaques en regard l'une de l'autre.

Quant à la charge, elle est de préférence en métal léger comme le lithium, le sodium ou l'aluminium. Elle peut être aussi constituée par un film déposé sur la face arrière du projectile ou sur la face avant de la culasse.

La charge peut être aussi constituée par une poudre conductrice ou rendue conductrice. On peut prendre par exemple une poudre constituée de matériaux composites comme les alliages NaK, NaLi, les fluorures LiF, NaF et les hydrures NaH, LiH, ces matériaux étant pris seuls ou en combinaison.

La charge peut encore être une feuille mince introduite entre la culasse et le projectile.

Mais elle peut aussi être liquide, et introduite par capillarité entre le projectile et la culasse.

## Revendications

1. Procédé de lancement de projectiles à une hypervitesse consistant à provoquer à l'arrière d'un projectile introduit dans un canon une augmentation brutale de pression apte à propulser le projectile hors du canon, cette augmentation étant produite à partir d'une charge liquide, caractérisé par le fait qu'on fait passer directement cette charge liquide à l'état de vapeur, sans ébullition, par effet Joule.

2. Procédé selon la revendication 1, caractérisé par le fait que la charge conductrice est initialement à l'état solide et est rendue liquide dans une phase préliminaire de chauffage par effet Joule qui provoque la fusion de la charge.

3. Procédé selon la revendication 1, caractérisé par le fait que l'effet Joule est produit par la décharge très rapide d'un banc de condensateurs à travers une ligne de propagation et la charge conductrice.

4. Procédé selon la revendication 3, caractérisé par le fait que la décharge se produit pendant une durée allant d'environ 50 nanosecondes à environ 1 microseconde.

5. Procédé selon la revendication 4, caractérisé par le fait que la décharge se produit pendant une durée de l'ordre de quelques centaines de nanosecondes.

6. Lanceur de projectile à hypervitesse, mettant en oeuvre le procédé selon la revendication 1, ce lanceur comprenant un canon (24, 26) dans lequel est introduit un projectile (28) et un moyen pour créer une augmentation brutale de pression à l'arrière du projectile apte à propulser le projectile hors du canon, ce moyen contenant une charge liquide, caractérisé par le fait que ce moyen est apte à faire passer directement la charge liquide à l'état vapeur, sans ébullition, par effet Joule.

7. Lanceur à hypervitesse selon la revendication 6, caractérisé par le fait que le moyen pour chauffer la charge par effet Joule est constitué par un banc de condensateurs (10) relié à la charge (32) par une ligne électrique de propagation à faible inductance (12).

8. Lanceur à hypervitesse selon la revendication 7, caractérisé par le fait que le canon est formé par deux parties métalliques (24, 26) reliées aux conducteurs de la ligne électrique, la charge conductrice (32) étant disposée entre ces deux parties.

9. Lanceur à hypervitesse selon la revendication 8, caractérisé par le fait que le canon est constitué par un tube extérieur métallique (24) et un cylindre intérieur métallique (26), le projectile (32) ayant alors la forme d'une couronne remplissant partiellement le volume séparant le tube extérieur et le cylindre intérieur.

10. Lanceur à hypervitesse selon la revendication 9, caractérisé par le fait que le canon comprend, en outre, une culasse massive (30) disposée à l'arrière du canon entre le tube extérieur (24) et le cylindre intérieur (26).

11. Lanceur à hypervitesse selon la revendication 6, caractérisé par le fait que le tube extérieur (24) et le cylindre intérieur (26) ont une géométrie circulaire.

12. Lanceur à hypervitesse selon la revendication 6, caractérisé par le fait que le canon est placé dans le vide.

13. Lanceur hypervitesse selon la revendication 6, caractérise par le fait que la charge (32) est on métal léger.

14. Lanceur à hypervitesse selon la revendication 13, caractérisé par le fait que le métal léger utilisé pur la charge est pris dans le groupe qui comprend le lithium, le sodium et l'aluminium.

15. Lanceur à hypervitesse selon la revendication 14, caractérisé par le fait que le métal constituant la charge est un film déposé sur la face arrière du projectile (28).

16. Lanceur à hypervitesse selon la revendication 14, caractérisé par le fait que le métal constituant la charge est un film déposé sur la face avant de la culasse (30).

17. Lanceur à hypervitesse selon la revendication 6, caractérisé par le fait que la charge est une poudre conductrice.

18. Lanceur à hypervitesse selon la revendication 17, caractérisé par le fait que la charge est une poudre constituée de matériaux composites pris dans le groupe comprenant les alliages NaK, NaLi, les fluorures LiF, NaF, et les hydrures NaH, LiH, ces matériaux étant pris seuls ou en combinaison.

19. Lanceur à hypervitesse selon la revendication 6, caractérisé par le fait que la charge est une feuille mince introduite entre la culasse (30) et le projectile (28).

20. Lanceur à hypervitesse selon la revendication 6, caractérisé par le fait que la charge est liquide, et introduite par capillarité.

## Claims

1. Method for launching projectiles at an ultra-high velocity consisting of bringing about to the rear of a projectile introduced into a gun a sudden pressure increase able to propel the projectile out of the gun, said increase being produced from a liquid charge, characterized in that said liquid charge is directly passed into the vapour state without boiling by the Joule effect.

2. Method according to claim 1, characterized in that the conductive charge is initially in the solid state and is made liquid in a preliminary heating phase by the Joule effect, which brings about the fusion of the charge.

3. Method according to claim 1, characterized in that the Joule effect is produced by the very rapid discharge of a bank of capacitors across a propagation line and the conductive charge.

4. Method according to claim 3, characterized in that the discharge is produced for a period between approximately 50 nanoseconds and approximately 1 microsecond.

5. Method according to claim 4, characterized in that the discharge occurs for approximately a few hundred nanoseconds.

6. Ultra-high velocity projectile launcher performing the method according to claim 1, said launcher comprising a gun (24, 26) into which is introduced a projectile (28) and a means for producing a sudden pressure increase to the rear of the projectile and able to propel the projectile out of the gun, said means comprising a liquid charge, characterized in that said means is directly able to pass the liquid charge into the vapour state without boiling by the Joule effect.

7. Ultra-high velocity launcher according to claim 6, characterized in that the means for heating the charge by the Joule effect is constituted by a bank of capacitors (10) connected to the charge (32) by an electrical low inductance propagation line (12).

8. Ultra-high velocity launcher according to claim 7, characterized in that the gun is formed by two metal parts (24, 26) connected to the conductors of the electric line, the conductive charge (32) being positioned between said two parts.

9. Ultra-high velocity launcher according to claim 8, characterized in that the gun is constituted by an outer metal tube (24) and an inner metal cylinder (26), the projectile (32) then being shaped like a ring partly filling the volume separating the outer tube and the inner cylinder.

10. Ultra-high velocity launcher according to claim 9, characterized in that the gun also comprises a solid yoke (30) located to the rear of the gun between the outer tube (24) and the inner cylinder (26).

11. Ultra-high velocity launcher acording to claim 6, characterized in that the outer tube (24) and the inner tube (26) have a circular geometry.

12. Ultra-high velocity launcher according to claim 6, characterized in that the gun is placed in a vacuum.

13. Ultra-high velocity launcher according to claim 6, characterized in that the charge (32) is of light metal.

14. Ultra-high velocity launcher according to claim 13, characterized in that the light metal used for the charge is taken from the group including lithium, sodium and aluminium.

15. Ultra-high velocity launcher according to claim 14, characterized in that the metal constituting the charge is a film deposited on the rear face of the projectile (28).

16. Ultra-high velocity launcher according to claim 14, characterized in that the metal constituting the charge is a film deposited on the front face of the yoke (30).

17. Ultra-high velocity launcher according to claim 6, characterized in that the charge is a conductive powder.

18. Ultra-high velocity launcher according to claim 17, characterized in that the charge is a powder constituted by composite materials from the group including alloys NaK, NaLi, fluorides LiF, NaF, and hydrides NaH, LiH, said materials being considered singly or in combination.

19. Ultra-high velocity launcher according to claim 6, characterized in that the charge is a thin sheet introduced between the yoke (30) and the projectile (28).

20. Ultra-high velocity launcher according to claim 6, characterized in that the charge is liquid and is introduced by capillarity.

**Patentansprüche**

1. Verfahren zum Abschießen von Geschossen mit einer Übergeschwindigkeit, das darin besteht hinter einem in einem Lauf eingeführten Projektil einen heftigen Druckanstieg zu verursachen, der geeignet ist, das Projektil aus dem Lauf zu treiben, wobei dieser Anstieg ausgehend von einer flüssigen Ladung erzeugt wird, gekennzeichnet durch die Tatsache, daß man diese flüssige Ladung direkt ohne Sieden durch Joulesche Wärme in den Dampfzustand bringt.

2. Verfahren nach Anspruch 1, gekennzeichnet durch die Tatsache, daß die leitfähige Ladung zunächst im festen Zustand ist und in einer Vorphase durch Aufwärmen mittels Joulescher Wärme, die das Schmelzen der Ladung verursacht, flüssig gemacht wird.

3. Verfahren nach Anspruch 1, gekennzeichnet durch die Tatsache, daß die Joulesche Wärme durch die sehr schnelle Entladung einer Bank von Kondensatoren über eine Übertragungsleitung und die leitfähige Ladung erzeugt wird.

4. Verfahren nach Anspruch 3, gekennzeichnet durch die Tatsache, daß die Entladung während einer Dauer von etwa 50 Nanosekunden bis 1 Mikrosekunde stattfindet.

5. Verfahren nach Anspruch 4, gekennzeichnet durch die Tatsache, daß die Entladung während einer Dauer der Ordnung von einigen hundert Nanosekunden stattfindet.

6. Abschußvorrichtung für Projektile mit Übergeschwindigkeit, die das Verfahren nach Anspruch 1 einsetzt, wobei diese Abschußvorrichtung einen Lauf (24, 26), in den ein Projektil (28) eingeführt wird, und eine Vorrichtung zur Erzeugung eines heftigen Druckanstiegs hinter dem Projektil, der geeignet ist, das Projektil aus dem Lauf zu treiben, aufweist, wobei diese Vorrichtung eine flüssige Ladung enthält, gekennzeichnet durch die Tatsache, daß diese Vorrichtung geeignet ist, die flüssige Ladung direkt ohne Sieden durch Joulesche Wärme in den Dampfzustand zu bringen.

7. Abschußvorrichtung für Übergeschwindigkeit nach Anspruch 6, gekennzeichnet durch die Tatsache, daß die Vorrichtung zum Erwärmen der Ladung durch Joulesche Wärme aus einer Kondensatorbank (10) besteht, die mit der Ladung über eine elektrische Verbindungsleitung mit geringer Induktanz verbunden ist.

8. Abschußvorrichtung für Übergeschwindigkeit nach Anspruch 7, gekennzeichnet durch die Tatsache, daß der Lauf aus zwei metallischen Teilen (24, 26) besteht, die mit den Leitern der elektrischen Leitung verbunden sind, wobei die leitende Ladung (32) zwischen diesen beiden Teilen angeordnet ist.

9. Abschußvorrichtung für Übergeschwindigkeit nach Anspruch 8, gekennzeichnet durch die Tatsache, daß der Lauf aus einem äußeren, metallischen Rohr (24) und einem inneren, metallischen Zylinder (26) besteht, wobei das Projektil dann die Form einer Krone besitzt, die teilweise das Volumen ausfüllt, das das äußere Rohr und den inneren Zylinder trennt.

10. Abschußvorrichtung für Übergeschwindigkeit nach Anspruch 9, gekennzeichnet durch die Tatsache, daß der Lauf weiterhin einen massiven Geschützverschluß (30) aufweist, der im hinteren Bereich des Laufs zwischen dem äußeren Rohr (24) un dem inneren Zylinder angeordnet ist.

11. Abschußvorrichtung für Übergeschwindigkeit nach Anspruch 6, gekennzeichnet durch die Tatsache, daß das äußere Rohr (24) und der innere Zylinder (24) eine kreisförmige Geometrie besitzen.

12. Abschußvorrichtung für Übergeschwindigkeit nach Anspruch 6, gekennzeichnet durch Tatsache, daß der Lauf im Vakuum angeordnet ist.

13. Abschußvorrichtung für Übergeschwindigkeit nach Anspruch 6, gekennzeichnet durch die Tatsache, daß die Ladung (32) aus Leichtmetall besteht.

14. Abschußvorrichtung für Übergeschwindigkeit nach Anspruch 13, gekennzeichnet durch die Tatsache, daß das für die Ladung verwendete Leichtmetall aus der Gruppe genommen wird, die Lithium, Natrium und Aluminium aufweist.

15. Abschußvorrichtung für Übergeschwindigkeit nach Anspruch 14, gekennzeichnet durch die Tatsache, daß das Metall, das die Ladung bildet, ein auf der Rückseite des Projektils (28) abgeschiedener Film ist.

16. Abschußvorrichtung für Übergeschwindigkeit nach Anspruch 14, gekennzeichnet durch die Tatsache, daß das Metall, das die Ladung bildet, ein auf der Vorderseite des Geschützverschlusses (30) abgeschiedener Film ist.

17. Abschußvorrichtung für Übergeschwindigkeit nach Anspruch 6, gekennzeichnet durch die Tatsache, daß die Ladung ein leitfähiges Pulver ist.

18. Abschußvorrichtung für Übergeschwindigkeit nach Anspruch 17, gekennzeichnet durch die Tatsache, daß die Ladung ein Pulver ist, das aus zusammengesetzten Materialien besteht, die aus der Gruppe genommen werden, die die Legierungen NaK, NaLi, die Fluoride LiF, NaF und die Hydride NaH, LiH aufweist, wobei diese Materialien allein oder in Verbindung verwendet werden.

19. Abschußvorrichtung für Übergeschwindigkeit nach Anspruch 6, gekennzeichnet durch die Tatsache, daß die Ladung ein dünnes Blatt ist, das zwischen den Geschützverschluß (30) und das Projektil (28) eingeführt wird.

20. Abschußvorrichtung für Übergeschwindigkeit nach Anspruch 6, gekennzeichnet durch die Tatsache, daß die Ladung flüssig ist und durch Kapillarkräfte eingeführt wird.

FIG. 1

EP 0 251 864 B1

FIG. 2

FIG. 3

FIG. 4

FIG. 5